# EUROPEAN PATENT SPECIFICATION

(11) **EP 0 819 102 B1**
(45) Date of publication and mention of the grant of the patent: **28.04.1999**
(21) Application number: 97902346.2
(22) Date of filing: 06.02.1997
(51) Int. Cl.: C03C 13/06

(54) **MINERAL FIBER COMPOSITION**
MINERALFASERZUSAMMENSETZUNG
COMPOSITION A BASE DE FIBRES MINERALES

(30) Priority: 06.02.1996 DE 19604238
(43) Date of publication of application: 21.01.1998
(73) Proprietor: ISOVER SAINT-GOBAIN, 92400 Courbevoie (FR)
(72) Inventor: STEINKOPF, Bernd, D-67061 Ludwigshafen (DE); HOLSTEIN, Wolfgang, D-35315 Homberg (DE); KATZSCHMANN, Axel, D-68723 Schwetzingen (DE); LOHE, Peter, D-67112 Mutterstadt (DE)
(74) Representative: Winter, Brandl & Partner
(86) International application number: EP9700545
(87) International publication number: WO9729057

(56) References cited:
- EP-A- 0 009 418
- EP-A- 0 583 791
- WO-A-83/01947
- WO-A-96/14274
- PL-A- 160 196

## Description

The present invention relates to a mineral fiber composition which is highly decomposable in the physiological medium.

The prior art describes several mineral fiber compositions which are specified to be decomposable in a physiological environment.

Physiological decomposition of mineral fiber compositions is of great significance inasmuch as various investigations point out that certain mineral fibers having very small diameters in the range of less than 3 µm are suspected of being carcinogenic, whereas mineral fibers of such dimensions which are physiologically well decomposable do not show any carcinogenicity.

The mineral fiber compositions do, however, also have to have good processing properties with known methods for manufacturing small-diameter mineral wool, in particular the blast drawing method. This means particularly a sufficient processing range of e.g. 80°C and suitable viscosity of the molten material.

In addition, the mechanical and thermal properties of the mineral fibers and of the respective products produced therefrom are of decisive importance. Mineral fibers are for instance utilised in a large scope for insulation purposes. Especially for utilisation in the industrial sector and for fire protection elements, the mineral fibers need to have sufficient heat stability.

It is the object of the invention to create a new mineral fiber composition which is distinguished by a high degree of physiological decomposability, shows good heat stability, has good processing properties, and can be produced economically.

The invention is based on the insight that this object may be achieved by specific mineral fiber compositions made up of silicon dioxide and alkaline earth oxides, and furthermore have a relatively high content of sodium oxide and/or potassium oxide and a substantial content of alumina as well as titanium oxide and/or iron oxide.

It was found that such mineral fiber compositions satisfy the combination of required properties, as there are a high degree of physiological decomposability, sufficient heat stability for insulation purposes in the industrial sector, and good processing properties in manufacturing the mineral wool proper and the products. This also includes the condition that the upper devitrification temperature of the molten material is preferably lower than 1,300°C. The mean fiber diameter is preferably 4 to 5 µm or less.

The subject matter of the invention is a mineral fiber composition which has a high degree of decomposability in the physiological medium and which is characterised by the following constituents in weight per cent:

| | |
|---|---|
| SiO₂ | 30 to less than 51 |
| Al₂O₃ | higher than 11.5; in particular higher than 13, up to 25 |
| CaO | 2 to less than 23 |
| MgO | 0 to 15 |
| Na₂O + K₂O | higher than 10 to 19 |
| TiO₂ + Fe₂O₃ | 6 to 18 |
| Various | 0 to 3 |

What is referred to by Fe₂O₃ in this context are the contents of Fe₂O₃ and of FeO (expressed as Fe₂O₃).

WO-A-96/14274, a document relevant under Art. 54(3)(4) EPC, is directed to biodegradable mineral fiber compositions having in weight percent: 32 to 48 % SiO₂, 10 to 30 % Al₂O₃, 10 to 30 % CaO, 2 to 20 % MgO, 2 to 15 % FeO, 0 to 12 % Na₂O + K₂O and 0 to 6 % TiO₂. None of the numerous specific examples of mineral fiber compositions disclosed in said document does, however, fall within the range of the compositions according to the present invention. Moreover, in a (particularly) preferred embodiment according to said document Na₂O+K₂O is between 8 to 10 % by weight, leading outside the range for said components as claimed herein.

Furthermore, EP-A-583 791, EP-A-9418, WO-A-83/01947 and PL-A-160196 all describe glass fiber compositions with ranges overlapping those of the claimed compositions. However, none of said documents contains an example falling within the claimed ranges, said documents being also silent as regards a possible biodegradability of the fibers made from corresponding compositions.

In preferred embodiments of the invention, the Al₂O₃ content is around 14.2% (wt.), 14.5% (wt.) or 17.1% (wt.) as concentration values, or as minimum values of the concentration range up to 25% (wt.).

The concentration of Na₂O + K₂O preferably amounts to 10.4% (wt.) or 12% (wt.) as concentration values, or as minimum values of the concentration range up to 19% (wt.).

The mineral fiber compositions of the invention in particular can be well attenuated by the blast drawing method, which means that a mineral wool having good fineness and a low bead content is obtained.

Such mineral fibers attain high heat stability and may also be used for fire protection structures having a resistance rating of at least 90 minutes which was determined in the so-called small-flame furnace according to DIN (German Industrial Standard) 4102, Part 17. Furthermore the limit temperatures of application as determined according to AGQ 132 for the industrial sector are higher than 600°C.

Although the relatively high proportion of sodium oxide and/or potassium oxide results in a lowered melting point and thus in better processing properties in the melting and fiberising processes, the wool nevertheless surprisingly has a high heat stability.

For obtaining the above specified properties, it is advantageous that the contents of alkali oxides and alumina have a molar ratio of

(Na₂O + K₂O) : Al₂O₃ ≤ 1:1,

preferably a molar ratio of 1:1.

This molar ratio roughly corresponds to a weight proportion of alkali oxides and alumina of
≤ 0,7:1.

The mineral fiber compositions according to the invention preferably may be melted in melting tubs fired by fossile fuels, in particular natural gas, at melting temperatures of 1,350 to 1,450°C. Such melting tubs are suited for obtaining a homogeneous molten material, which is a precondition for consistent product quality. Homogeneity of the molten glass material also facilitates reproduceability of the fiberisation process and thus of the thermal and mechanical product properties. Moreover the chemical composition of the mineral wool thus produced results in a consistently high degree of physiological decomposability.

In particular the addition of alumina, titanium-oxide and iron oxide increases the heat stability of the mineral wool.

Preferably the mineral fiber compositions of the invention have the following constituents in weight per cent:

| | |
|---|---|
| SiO₂ | 30 to less than 47 |
| Al₂O₃ | higher than 11.5; in particular higher than 13, up to 24 |
| CaO | 4 to 20 |
| MgO | 0 to 15 |
| Na₂O + K₂O | higher than 10, up to 18 |
| TiO₂ + Fe₂O₃ | 7 to 16 |
| Various | 0 to 2 |

In particular the mineral fiber compositions of the invention include the following constituents in weight per cent:

| | |
|---|---|
| SiO₂ | 35 to 45 |
| Al₂O₃ | higher than 12, up to 20 |
| CaO | 8 to 17.5 |
| MgO | 2 to 10 |
| Na₂O + K₂O | higher than 10, up to 16 |
| TiO₂ + Fe₂O₃ | 7 to 15 |
| Various | 0 to 2 |

The aluminum content of the composition is preferably between 13 and 20% (wt.).

The physiological decomposability of mineral fibers was determined in animal, i.e. *in-vivo* experiments by the so-called intratracheal test. Herefor the fibers to be tested were injected via the trachea into the bronchial system of the lungs of test animals (rats) by means of one or several injections. In rats as well as in human beings, particles which have penetrated into the lungs are decomposed physiologically by various defense mechanisms, e.g. macrophages, or chemical attack by lung fluid. At predetermined points of time, as a rule 35 animals are killed and the number of fibers, i.e. of non-decomposed fibers, inside the lungs is determined.

This serves to determine how quickly the fibers are decomposed inside the lungs. Based on the development over time and by approved mathematical methods, one determines the half-life period of the fiber, i.e. the time period in which 50% of the fibers inside the lungs are decomposed. A lower half-life corresponds to a higher degree of physiological decomposability of the fiber. Thus the so-called Bayer B-01 fiber has a mean half-life of 32 days in the intratracheal test.

In analogy with this B-01 mineral fiber, other mineral fibers were examined as well, which had half-life values in a range of less than 50 days and were rated to be non-carcinogenic.

The physiological decomposability of the mineral fibers according to the invention even reached values which were clearly lower than 50 days, in particular a half-life of less than 40 days. These values rule out carcinogenicity.

The temperature behavior of the mineral fibers was determined in a small-flame furnace as specified by DIN 4102, Part 17, Determination of limit temperature of application.

The invention shall be described in more detail below by reference to exemplary embodiments.

### Example 1

A mineral wool having the following composition in weight per cent was produced.

| | |
|---|---|
| SiO₂ | 41.3 |
| Al₂O₃ | 18.4 |
| CaO | 15.0 |
| MgO | 7.6 |
| Na₂O | 9.5 |
| K₂O | 1.3 |
| TiO₂ | 1.1 |
| Fe₂O₃ | 5.6 |

By using the blast drawing method and at an attenuating temperature between 1,300 and 1,400°C, this composition could readily be processed into mineral fibers having a mean diameter of 4,5 µm.

The wool met the conditions for the melting point test at 1,000°C.

### Example 2

A mineral wool having the following composition in weight per cent was produced:

| | |
|---|---|
| SiO₂ | 39.3 |
| Al₂O₃ | 18.3 |
| CaO | 18.4 |
| MgO | 6.6 |
| Na₂O | 4.5 |
| K₂O | 6.2 |
| TiO₂ | 0.4 |
| Fe₂O₃ | 6.1 |

By using the blast drawing method and at an attenuating temperature between 1,300 and 1,400°C, this composition could readily be processed into mineral fibers having a mean diameter of 4.5 to 5 µm.

### Example 3

A mineral wool having the following composition in weight per cent was produced:

| | |
|---|---|
| SiO₂ | 44.0 |
| Al₂O₃ | 18.5 |
| CaO | 13.0 |
| MgO | 5.2 |
| Na₂O | 6.6 |
| K₂O | 5.9 |
| TiO₂ | 0.4 |
| Fe₂O₃ | 6.2 |

By using the blast drawing method and at an attenuating temperature between 1,300 and 1,400°C, this composition could also readily be processed into mineral fibers having a mean diameter of 5.5 µm.

### Example 4

A mineral wool having the following composition in weight per cent was produced:

| | |
|---|---|
| SiO₂ | 37.4 |
| Al₂O₃ | 22.2 |
| CaO | 17.2 |
| MgO | 5.7 |
| Na₂O | 4.5 |
| K₂O | 6.2 |
| TiO₂ | 0.5 |
| Fe₂O₃ | 6.1 |

### Example 5

A mineral wool having the following composition in weight per cent was produced:

| | |
|---|---|
| SiO₂ | 43.9 |
| Al₂O₃ | 15.2 |
| CaO | 17.4 |
| MgO | 6.6 |
| Na₂O | 4.5 |
| K₂O | 6.2 |
| TiO₂ | 0.2 |
| Fe₂O₃ | 6.0 |

### Example 6

A mineral wool having the following composition in weight per cent was produced:

| | |
|---|---|
| SiO₂ | 42.6 |
| Al₂O₃ | 17.9 |
| CaO | 15.0 |
| MgO | 7.3 |
| Na₂O | 4.4 |
| K₂O | 6.1 |
| TiO₂ | 0.4 |
| Fe₂O₃ | 6.3 |

## Claims

1. Mineral fiber composition which is decomposable in the physiological medium, characterised by the following constituents in weight per cent:
| | |
|---|---|
| SiO₂ | 30 to less than 51 |
| Al₂O₃ | higher than 11.5; in particular higher than 13, up to 25 |
| CaO | 2 to less than 23 |
| MgO | 0 to 15 |
| Na₂O + K₂O | higher than 10 to 19 |
| TiO₂ + Fe₂O₃ | 6 to 18 |
| Various | 0 to 3 |

2. Mineral fiber composition according to claim 1, characterised by the following constituents in weight per cent:
| | |
|---|---|
| SiO₂ | 30 to less than 47 |
| Al₂O₃ | higher than 11.5; in particular higher than 13, up to 24 |
| CaO | 4 to 20 |
| MgO | 0 to 15 |
| Na₂O + K₂O | higher than 10, up to 18 |
| TiO₂ + Fe₂O₃ | 7 to 16 |
| Various | 0 to 2 |

3. Mineral fiber composition according to claim 1 or 2, characterised by the following constituents in weight per cent:
| | |
|---|---|
| SiO₂ | 35 to 45 |
| Al₂O₃ | higher than 14, up to 20 |
| CaO | 8 to 17.5 |
| MgO | 2 to 10 |
| Na₂O + K₂O | higher than 10, up to 16 |
| TiO₂ + Fe₂O₃ | 7 to 15 |
| Various | 0 to 2 |

## Patentansprüche

1. Mineralfaser-Zusammensetzung, die in dem physiologischen Medium zersetzt werden kann, gekennzeichnet durch die folgenden Bestandteile in Gewichtsprozent:
| | |
|---|---|
| SiO₂ | 30 bis weniger als 51 |
| Al₂O₃ | höher als 11,5; insbesondere höher als 13, bis zu 25 |
| CaO | 2 bis weniger als 23 |
| MgO | 0 bis 15 |
| Na₂O + K₂O | höher als 10 bis 19 |
| TiO₂ + Fe₂O₃ | 6 bis 18 |
| Verschiedene | 0 bis 3 |

2. Mineralfaser-Zusammensetzung nach Anspruch 1, gekennzeichnet durch die folgenden Bestandteile in Gewichtsprozent:
| | |
|---|---|
| SiO₂ | 30 bis weniger als 47 |
| Al₂O₃ | höher als 11,5; insbesondere höher als 13, bis zu 24 |
| CaO | 4 bis 20 |
| MgO | 0 bis 15 |
| Na₂O + K₂O | höher als 10, bis zu 18 |
| TiO₂ + Fe₂O₃ | 7 bis 16 |
| Verschiedene | 0 bis 2 |

3. Mineralfaser-Zusammensetzung nach Anspruch 1 oder 2, gekennzeichnet durch die folgenden Bestandteile in Gewichtsprozent:
| | |
|---|---|
| SiO₂ | 35 bis 45 |
| Al₂O₃ | höher als 14, bis zu 20 |
| CaO | 8 bis 17,5 |
| MgO | 2 bis 10 |
| Na₂O + K₂O | höher als 10, bis zu 16 |
| TiO₂ + Fe₂O₃ | 7 bis 15 |
| Verschiedene | 0 bis 2 |

## Revendications

1. Composition à base de fibres minérales qui est décomposable dans le milieu physiologique, caractérisée par les constituants suivants dont la teneur est exprimée en pourcentage pondéral :
- SiO₂ 30 à moins de 51
- Al₂O₃ supérieur à 11,5 ; en particulier supérieur à 13 et pouvant aller à 25
- CaO 2 à moins de 23
- MgO 0 à 15
- Na₂O + K₂O supérieur à 10 et pouvant aller à 19
- TiO₂ + Fe₂O₃ 6 à 18
- Divers 0 à 3.

2. Composition à base de fibres minérales selon la revendication 1, caractérisée par les constituants suivants dont la teneur est exprimée en pourcentage pondéral :
- SiO₂ 30 à moins de 47
- Al₂O₃ supérieur à 11,5 ; en particulier supérieur à 13 et pouvant aller à 24
- CaO 4 à 20
- MgO 0 à 15
- Na₂O + K₂O supérieur à 10 et pouvant aller à 18
- TiO₂ + Fe₂O₃ 7 à 16
- Divers 0 à 2.

3. Composition à base de fibres minérales selon la revendication 1 ou la revendication 2, caractérisée par les constituants suivants dont la teneur est exprimée en pourcentage pondéral :
- SiO₂ 30 à 45
- Al₂O₃ supérieur à 14 et pouvant aller à 20
- CaO 8 à 17,5
- MgO 2 à 10
- Na₂O + K₂O supérieur à 10 et pouvant aller à 16
- TiO₂ + Fe₂O₃ 7 à 15
- Divers 0 à 2.
